# EUROPEAN PATENT SPECIFICATION

(11) **EP 3 730 333 B1**
(45) Date of publication and mention of the grant of the patent: **21.12.2022**
(21) Application number: 20165945.5
(22) Date of filing: 26.03.2020
(51) Int. Cl.: B60K 35/00, G02B 27/01, G02F 1/1335

(54) **DISPLAY ASSEMBLY FOR VEHICLE**
ANZEIGEANORDNUNG FÜR FAHRZEUG
ENSEMBLE D'AFFICHAGE POUR VÉHICULE

(30) Priority: 23.04.2019 CN 201910327210
(43) Date of publication of application: 28.10.2020
(73) Proprietor: Bayerische Motoren Werke Aktiengesellschaft, 80809 München (DE)
(72) Inventor: Baier, Kai, Peking, 100013 (CN); Veddeler, Jens, 48147 München (DE); Kang, Won Kyu, Shanghai, 200336 (CN)

(56) References cited:
- DE-A1-102015 220 654
- US-A1- 2011 074 657
- US-A1- 2017 097 505
- US-B1- 8 816 578

## Description

### TECHNICAL FIELD

The present invention relates to a display assembly for a vehicle and a vehicle comprising such display assembly.

### BACKGROUND ART

Recently, a head-up display or an augmented reality (AR) display that perform projection on a windshield are increasingly used in vehicles, wherein the augmented display superimposes the display content in the current road view on the windshield by means of the augmented reality technology, so as to enable the driver to pay particular attention to specific road conditions and/or to provide auxiliary information to the driver. Such display can provide information, particularly for the driver, conveniently and safely without having to transferring attention to a conventional instrument panel or center console. In addition, in the fully automatic driving mode, such display can also provide entertainment information.

Typically, such display requires mounting a light source performing projection within an instrument panel below the windshield. However, in order to allow that the light emitted by the light source does not exit towards the driver, it is typically necessary to dispose the light source in a deep hole within the instrument panel, that is deeply embedded into the instrument panel. Such solution occupies the space within the instrument panel, which is detrimental to the layout of the members within the instrument panel so as to affect the vehicle design and also make it difficult to clean the light source. Another solution consists in that a light shielding wall between the driver and the light source. Such solution causes a diminished field of vision of the driver, which is not favorable for observing the road conditions. At the same time, it also affects the design of the interior furnishing of the vehicle and is also not favorable for cleaning. Moreover, the existing solutions cannot effectively prevent the reflection of light of such display on the side-window glazing.

US2017097505 A1 discloses a display unit which is equipped with an LED circuit body for irradiating light onto the windshield of a vehicle and a surface panel positioned on the front side in the light irradiating direction of the LED circuit body and constituting part of the surface of the instrument panel of the vehicle. The surface panel is provided with a plurality of pores formed in the direction connecting the LED circuit body to the windshield.

US8816578 B1 relates to a display system and method uses a display element. The display element can provide linearly polarized light. A wave retarder film can be configured to adjust the phase of the linearly polarized light so that reflections of the linearly polarized light from a surface in the environment of the display are reduced. A first light control layer is configured to constrain the field of view of the display in at least a first direction.

DE102015220654 A1 relates to a head-up display system with a display unit for a motor vehicle, where the vehicle has a dashboard and a windscreen, and where the display unit in the area of the dashboard is arranged and a light source with a variety of lighting elements for lighting each at least a part of the windshield, as well as a shading layer, which extends between the light source and the windshield over the light source and each limited an effective dispersion of light elements in the way, that only a defined area of the room is lit up by the display unit which proves.

US2011074657 A1 discloses a head-up display device placed on an upper surface of a dashboard.

At present, there is a need for expansion in the dimension of a head-up display and an augmented reality display. The above-described solution is even not favorable for large-area implementation of a head-up display and an augmented reality display.

### CONTENT OF THE DISCLOSURE

It is a task of the present invention to provide a display assembly for a vehicle, which is capable of preventing light emitted by its light source from exiting to an undesired position in a simply structured and easily implemented manner.

According to the present invention, there is provided a display assembly for a vehicle, wherein the display assembly comprises a light source provided in an instrument panel or on an instrument panel, for projecting to a windshield of the vehicle, characterized in that, a film having a microstructure is applied onto the light source, wherein the microstructure is used for restricting an exit angle of light emitted by the light source in at least two different directions, in particular at least in a longitudinal direction and a transverse direction of the vehicle.

In the present invention, a film having a microstructure may be referred to as a visual protective film by which the light source is prevented from directly emitting light to an undesired position. Thereby, the film having a microstructure constitutes a light-limiting device here. In particular, the driver will be not dazzled or disturbed by the light of the display assembly. The driver might be attracted by such light, so that it is impossible to focus attention on the road condition, thereby reducing the driving safety. Similarly, the light emitted by the light source will not directly exit to other traffic participants within the vehicle, such as the co-driver or the passengers in the back seat, and thus reduces the riding comfort. In addition, the bystanders outside the vehicle will be not affected by the light of the light source as well. Among them, the bystanders include pedestrians who participate in traffic, policemen who direct traffic or implement vehicle inspections, charging staff at an expressway toll station or a parking lot, and the like. In addition, the display assembly according to the present invention can also avoid affecting that the participants within the vehicle are captured by the traffic monitoring camera. Moreover, it is also possible to avoid that the light is reflected on the side-window glazing by limiting an exit angle of the light emitted by the light source. This will be also described in detail below. Under a desirable circumstance, the light emitted by the light source of the display assembly is limited to such as to be directed to the windshield only according to the present invention. Exemplarily, the exit angle of the light emitted by the light source may be limited to 45° to 85°, preferably 55° to 65°.

With the display assembly according to the present invention, it is possible to effectively overcome the defects in the prior art, so as not have to open a deep hole within an instrument panel of the vehicle or mount a light shielding wall on the instrument panel. Therefore, the present invention does not occupy the space within the instrument panel, to facilitate the layout of the members within the instrument panel, and does not diminish a field of vision of the driver. Furthermore, the display assembly according to the present invention does not require a deep hole or a light shielding wall, and thus facilitates the access by participants, thereby making it easy to perform cleaning. At the same time, the simple structure of the display assembly can also facilitate unifying the style of the interior furnishing of the vehicle and providing an aesthetic and comfortable experience for the traffic participants within the vehicle.

According to the present invention, the display assembly is a head-up display or an augmented reality display, which may be mounted in the instrument panel or on the instrument panel for projecting the display content to the windshield of the vehicle. The display content may be a static or dynamic screen, a monochromic or chromatic image, and a frame of a small or large dimension. The display content may provide an infotainment service for traffic participants within the vehicle. For example, the display assembly may provide vehicle condition information, navigation information, and road condition information to the driver. Additionally, the display assembly may provide entertainment and social possibilities for the co-driver or the passengers in the back seat.

According to the present invention, the light source includes at least one of an LCD display, an LED display, an OLED display and a projection device. The light source may be not only a surface of a planar display facing toward the windshield, but also an exit surface of the projection device facing toward the windshield.

According to one embodiment of the present invention, the microstructure is an opaque or light-absorbing grid structure which forms a plurality of rectangular light transmissive portions, wherein the rectangle has both sides respectively oriented along a longitudinal direction and a transverse direction of the vehicle. Here, the rectangular light transmissive portions are square light transmissive portions and/or oblong light transmissive portions. The shapes described here all refer to a two-dimensional shape obtained by top or bottom observation of an extending surface of the film having a microstructure, wherein the extending surface is a surface for applying and in particular attaching towards the light source. The grid structure described here refers to a crisscross structure obtained by top or bottom observation of an extending surface of the film having a microstructure. In particular, in the case of oblong light transmissive portions, the long side of the oblong may be parallel to a longitudinal direction of the vehicle.

By means of the square or oblong light transmissive portions according to the present invention, it is possible to limit the exit angle of the light emitted by the light source in exactly two directions. The two directions consist in the longitudinal direction and the transverse direction of the vehicle respectively. With such an embodiment, it is firstly possible to limit the light emitted by the display assembly from exiting backwards directly to the driver and/or other traffic participants within the vehicle along a longitudinal direction of the vehicle. Next, it is possible to limit the light emitted by the display assembly from exiting directly toward the bystanders outside the vehicle, wherein the bystanders include pedestrians who participate in traffic, policemen who direct traffic or implement vehicle inspections, charging staff at an expressway toll station or a parking lot, and the like. In addition, it is possible to limit the light emitted by the display assembly from being reflected into the driver's and/or co-driver's eyes through the side-window glazing within the vehicle. In the prior art, the light emitted by the display assembly as a head-up display and an augmented reality display might also partially exit toward the side-window glazing and then be reflected by the side-window glazing, so that the driver and/or co-driver might see a disturbing image or light on the side-window glazing, which will produce an adverse effect over the driver's observation of traffic conditions, and particularly observation of the traffic conditions laterally of the vehicle.

According to one embodiment of the present invention, the grid structure is formed by two layers of louver films, in which louvers are stacked orthogonally to each other. With such embodiment, the display assembly according to the present invention can be assembled in a simple, cost-effective and easy-to-implement manner. The louver films having general specifications are quite common in the market. Therefore, it is only necessary to attach the louver films to the light source layer by layer according to a specified direction when the display assembly is assembled. The embodiment of the present invention is also particularly suitable for retrofitting or supplementing a head-up display or a virtual reality display already existing within the vehicle. That is, two layers of louver films are attached to the light source layer by layer in a mutually orthogonal manner, thereby improving the optical performance of the head-up display or virtual reality display, to prevent the light emitted from its light source from exiting towards an undesired position.

Particularly preferably, the louver film having louvers oriented along the longitudinal direction of the vehicle is located above the louver film having louvers oriented along the transverse direction of the vehicle. Thus, the exit angle defined along the transverse direction of the vehicle will be less than the exit angle defined along the longitudinal direction of the vehicle. This especially considers differently limiting the exit angle of the light emitted by the light source in different directions. With such embodiment, it is possible to differently limit the exit angle in two different directions by using the louver film in a particularly simple manner.

According to one embodiment of the present invention, the two layers of louver films are constructed to be the same; or the two layers of louver films have mutually different louver pitches and/or mutually different louver heights. When the two layers of louver films use the same specification, the assembly and/or retrofitting of the display assembly is simplified, the confusion of the louver film is avoided during installation, and the manufacturing or retrofitting cost is reduced. When mutually different lover pitches and/or mutually different louver heights are used, different limits of the exit angle in different directions can be formed. Also preferably, the louver film having louvers oriented along the longitudinal direction of the vehicle is located above the louver film having louvers oriented along the transverse direction of the vehicle.

According to one embodiment of the present invention, a pitch of the louvers oriented along a longitudinal direction of the vehicle is less than a pitch of the louvers oriented along a transverse direction of the vehicle; and/or a height of the louvers oriented along a longitudinal direction of the vehicle is more than a height of the louvers oriented along a transverse direction of the vehicle. Here, the pitch of the louvers means the distance between two adjacent louvers, while the height of the louvers means the height of the louvers in the normal direction of the film. Since the side-window glazing of the vehicle is generally tilted inward and/or has a curvature, it is necessary to more strictly limit the exit angle of the light emitted by the light source along the transverse direction of the vehicle.

According to one embodiment of the present invention, the louver pitch and/or the louver height vary in an extension direction thereof, and in particular the louver pitch gradually decreases from a center of the light source to edges of the light source and/or the louver height gradually increases from a center of the light source to edges of the light source. In the embodiment, it is possible to favorably adapt to a large-area head-up display or augmented reality display, and in particular a head-up display or an augmented reality display that substantially covers the entire windshield. In this case, there are significantly higher requirements for the exit angle on various edges and in particular the transverse edges of the light source. Thus, it is possible to adapt to different requirements for the exit angle by varying the lover pitch and/or the louver height in its extension direction. Typically, a smaller exit angle is required at both ends of the display assembly in the longitudinal direction and/or transverse direction. This requirement can be satisfied in such a way that the louver pitch gradually decreases toward the edge of the light source and/or the louvers height gradually increases toward the edge of the light source. Moreover, such embodiment may also reduce the light loss of the display assembly as much as possible.

In addition, the head-up display or augmented reality display may require a curved surface due to the design requirements, and the above variations can also be favorably adapted to the curved surface of the light source. For example, the outwardly convex curved area needs to further limit the exit angle; while the inwardly concave curved area needs to avoid excessively limiting the exit angle so as to avoid excessive light loss.

In addition, excessive loss of the light radiation over the entire range of the display assembly can be avoided by the gradually decreasing louver pitch and/or the gradually increasing louver height.

According to one embodiment of the present invention, the grid structure is formed by a single layer of meshes. Alternative to the above-described two-layer structure, the present invention may also use a single layer of meshes to limit the light exit. The assembly or retrofitting process of the display assembly can be further simplified by effectuating limiting the exit angle in said two directions by means of a single layer of meshes in only one layer.

According to one embodiment of the present invention, the single layer of meshes define a square or oblong shape. Similar to the above-described embodiment, the single layer of meshes forms square or oblong light transmissive portions therebetween. The shapes described herein all refer to a two-dimensional shape obtained by top or bottom observations of an extending surface of the single layer of meshes. For the three-dimensional structure, the light-transmitting structure formed therebetween by the single layer of meshes should be a cube or a cuboid. In particular, the two sides of the square or oblong are respectively oriented according to the longitudinal and transverse directions of the vehicle, so that on the one hand it is possible to limit the light emitted by the display assembly from exiting directly towards the traffic participants inside and outside the vehicle along the longitudinal direction of the vehicle, and on the other hand it is possible to limit the light emitted by the display assembly from being reflected by the side-window glazing within the vehicle or directly to the participants on the side of the vehicle.

According to one embodiment of the present invention, a mesh dimension of the single layer of meshes varies in an extension direction thereof, and in particular the mesh dimension gradually decreases from a center of the light source to edges of the light source. Similar to the above-described embodiment, different requirements for the exit angle at different positions of the display assembly are satisfied by varying the mesh dimension. The light efficiency of the display assembly is affected as little as possible while the light exiting from the display assembly is prevented from being reflected on the side-window glazing of the vehicle.

According to one embodiment of the present invention, the microstructure is an opaque or light-absorbing pore plate structure which forms a plurality of round light transmissive portions. Alternative to the mesh or grid structure described above, the present invention may also advantageously use a film having a pore plate structure or having round light transmissive portions. The shapes described herein refer to a two-dimensional shape obtained by top or bottom observations of an extending surface of the pore plate structure. For the three-dimensional structure, the light-transmitting structure formed therebetween by the pore plate structure should be cylinder. Furthermore, the pore plate here means a plate-like geometric structure provided with a large number of pores. Here, the pore plate is not necessarily solid against flexing, but may also be flexible. With this embodiment, it is first possible to limit the exit angle in all directions, so as to achieve an all-round light limiting effect. Moreover, this embodiment also further simplifies the assembly or retrofitting of the display assembly due to the absence of directional requirements for the film having the pore plate structure.

According to one embodiment of the present invention, an aperture of the round light transmissive portions varies in an extension direction of the pore plate structure, and in particular, the aperture gradually decreases from a center of the light source to edges of the light source and/or a height of the pore plate gradually increases from a center of the light source to edges of the light source. Similar to the above-described embodiment, different requirements for the exit angle at different positions of the display assembly are adapted by varying the aperture.

According to one embodiment of the present invention, the microstructure is an opaque or light-absorbing pore plate structure which forms a plurality of elliptical light transmissive portions, wherein a long axis of the ellipse is oriented along a longitudinal direction of the vehicle. The shapes described herein all refer to a two-dimensional shape obtained by top or bottom observations of an extending surface of the pore plate structure. For the three-dimensional structure, the light-transmitting structure formed therebetween by the single layer of meshes should be an elliptical cylinder. By such embodiment, it is possible to adapt to a more strictly limit of the exit angle caused by the side-window glazing inwardly tilted and/or having a curvature.

Similar to the previous embodiments, a dimension of the elliptical light transmissive portions may also vary in an extension direction of the pore plate structure, and in particular a radius of the long axis and/or a radius of the short axis gradually decreases from a center of the light source to edges of the light source and/or a height of the pore plate gradually increases from a center of the light source to edges of the light source.

According to one embodiment of the present invention, the film having a microstructure is constructed by an pore plate of pores having a polygonal shape, wherein the polygon consists in a pentagon, a hexagon, an octagon or the like.

According to one embodiment of the present invention, the grid structure, the mesh structure or the pore plate structure is made from black or chromatic resin. The black or chromatic resin in the film can impart color to the film. In particular, the mentioned colors may be exhibited when viewed beyond the exit angle limited by the film having a microstructure. In this way, the appearance of the display assembly can be further improved, thereby unifying the appearance of the interior furnishing of the vehicle, so as to provide a more aesthetic and comfortable experience for the traffic participants.

According to one embodiment of the present invention, the light source includes an LCD display, an LED display, an OLED display and a projection device. That is, the present invention can be used not only for a planar display, but also for a projection device which may include a video projector and optical devices for reflection, refraction, amplification, and/or aligning. In the present invention, the film having a microstructure is disposed on an exit surface of the projection device facing towards the windshield.

According to one embodiment of the present invention, a surface of the light source is constructed to be flat or curved. In this regard, the flexible film according to the present invention may also be attached in such a manner as to favorably conform to a curvature of the curved surface. Moreover, according to some of the above-described embodiments, the present invention is also adapted to a curvature of the surface of the light source to limit the exit angle of the light emitted by the light source.

Another aspect of the present invention relates to a vehicle which comprises the display assembly according to the present invention, wherein the display assembly is disposed in or on an instrument panel and used for emitting light to a windshield. The above-described embodiments and technical advantages of the display assembly according to the present invention are equally suitable for the vehicle according to the present invention.

### BRIEF DESCRIPTION OF THE DRAWINGS

Fig. 1 shows a top view of a vehicle equipped with a display assembly according to the present invention;
Fig. 2 shows a schematic view of a longitudinal cross-section of a vehicle equipped with a display assembly according to the present invention;
Fig. 3 shows a schematic perspective view of a louver film;
Fig. 4 is a schematic view showing one embodiment of a grid structure formed by two layers of louver films in a top view;
Fig. 5 shows a front view of the vehicle;
Fig. 6 is a schematic view showing another embodiment of a grid structure formed by two layers of louver films in a top view;
Fig. 7 is a schematic view showing still another embodiment of a grid structure formed by two layers of louver films in a top view; and
Fig. 8 shows that the microstructure is constructed to be an opaque or light-absorbing pore plate structure in a top view.

### EMBODIMENTS

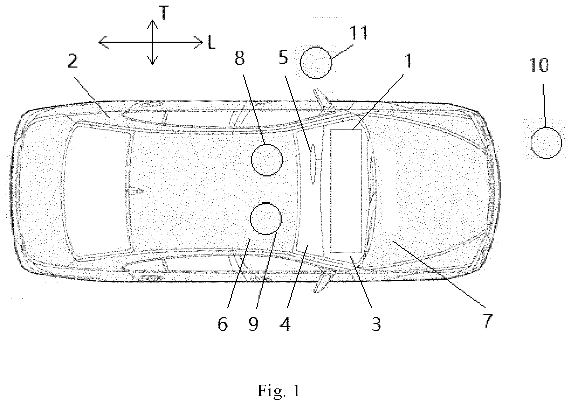

Fig. 1 shows a top view of a vehicle 2 equipped with a display assembly 1 according to the present invention. The display assembly 1 according to the present invention is exemplarily and illustratively described here by way of a car. The display assembly 1 according to the present invention, which is not limited thereto, may also be mounted in various types of passenger vehicles and commercial vehicles, such as freight vehicles, trucks, buses, motorcycles, and the like.

In the vehicle 2 as illustrated, the display assembly 1 according to the present invention is disposed in the instrument panel 3 of the vehicle and performs projection towards the windshield 4 of the vehicle 2. A panoramic head-up display or augmented reality display in which the projection surface covers almost the entire windshield 4 is shown in Fig. 1. However, the dimension of the display assembly 1 according to the present invention, which is not limited thereto, may be arbitrarily selected.

The possible positions of participants are indicated by circle symbols in Fig. 1. Below the roof 6 of the vehicle, a driver 8 may be situated behind the steering wheel 5. A co-driver 9 is situated next to the driver 8. The traffic participants 10, and in particular the pedestrians might bypass in front of the engine hood 7 of the vehicle. Other traffic participants 11, such as policemen who direct traffic or implement vehicle inspections, charging staff at an expressway toll station or a parking lot, might also be present next to the vehicle. In order to avoid the driver 8, the co-driver 9, the traffic participants 10, 11, the passengers in the back seat within the vehicle, and the traffic monitoring camera from being disturbed by the light emitted by the display assembly 1, a display assembly 1, that is specified according to the present invention and will be described in detail below, is used. Regarding the vehicle, the longitudinal direction L and the transverse direction T of the vehicle are also defined in Fig. 1, wherein the longitudinal direction L is the direction in which a line connecting the front and rear of the vehicle is situated, and the transverse direction T and the longitudinal direction L are oriented orthogonally to each other.

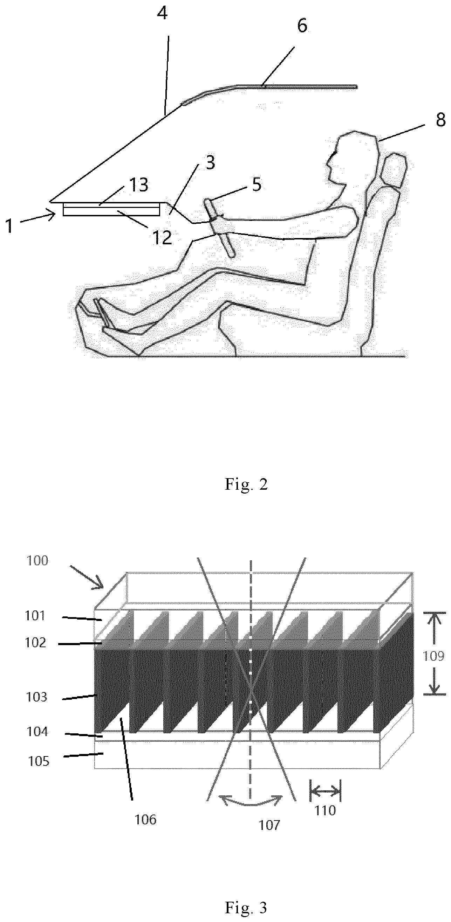

Fig. 2 shows a schematic view of a longitudinal cross-section of a vehicle equipped with a display assembly 1 according to the present invention. The display assembly 1 comprises a light source 12 provided in an instrument panel 3, for projecting to a windshield 4 of the vehicle 2. In order to prevent the light source 12 of the display assembly 1 from directly emitting light towards an undesired position and in particular the driver, a film 13 having a microstructure is applied onto the light source 12, wherein the microstructure is used for restricting an exit angle of light emitted by the light source 12 at least in a longitudinal direction and a transverse direction of the vehicle. Here, the light source 12 may include an LCD display, an LED display, an OLED display and a projection device. The film having a microstructure may be applied, and particularly attached to the exit surface of the light source 12.

Fig. 3 shows a schematic perspective view of a louver film 100. The louver film 100 of a single layer may include a substrate layer 101, an adhesive layer 102, a louver layer including a plurality of louvers 103 and a plurality of light transmissive portions 106, an adhesive layer 104, and a substrate layer 105. The louver film, which is not limited to the layer structure shown, may also have a scratch resistant layer, an anti-reflective layer, a thermal insulation layer, an additional adhesive layer, and the like. A light limiting angle 107 defined by the louver film 100 is schematically illustrated in Fig. 3. The light limiting angle is also referred to as a shutter angle or view angle in the field of a light control film. The light limiting angle is to limit the exit angle of the light passing through the louver film on the other side by means of two adjacent louvers 103. The light limiting angle 107 or the exit angle is related to the louver height 109 and the louver pitch 110. Wherein, the larger the louver height 109 is, the smaller the exit angle will be; while the smaller the louver pitch 110 is, the smaller the exit angle will be.

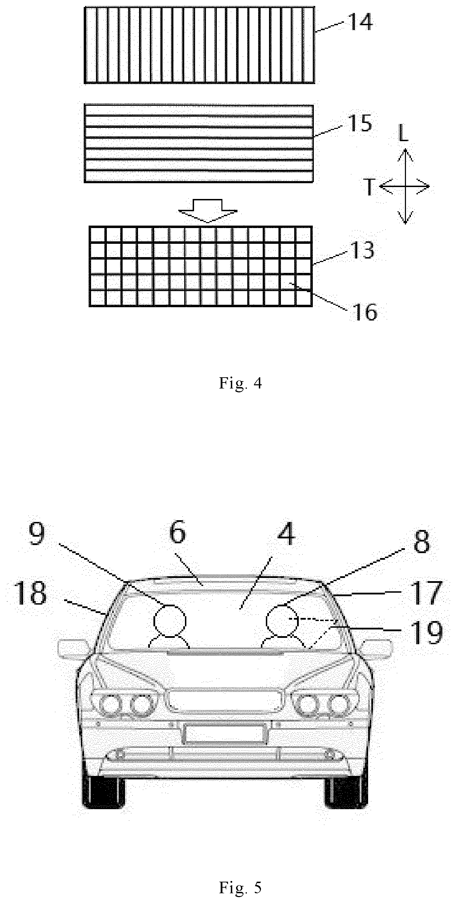

Fig. 4 is a schematic view showing one embodiment of a grid structure formed by two layers of louver films in a top view. The microstructure in Fig. 4 is an opaque or light-absorbing grid structure 13 which forms a plurality of square light transmissive portions 16 oriented along a longitudinal direction of the vehicle, wherein the rectangle has both sides respectively oriented along a longitudinal direction L and a transverse direction T of the vehicle. Fig. 4 shows one preferred embodiment of the grid structure 13, i.e. the louvers in the two layers of louver films are stacked orthogonally to each other. In Fig. 4, it is preferable that the louver film 14 having the louvers oriented along the longitudinal direction L of the vehicle is stacked on the louver film 15 in which the louver is having the louvers oriented along the transverse direction T of the vehicle, thereby forming the grid structure 13 having square light transmissive portions 16. Furthermore, an opposite stacking sequence is also possible. In the embodiment shown in Fig. 4, the two layers of louver films 14 and 15 are constructed to have the same louver pitch. However, depending on the requirements for the exit angle, the louver heights of the two layers of louver films 14 and 15 may be selected to be the same or different. It is particularly advantageous that, the louver height of the louver film 14 having the louvers oriented along the longitudinal direction L of the vehicle is greater than the louver height of the louver film 15 having the louvers oriented along the transverse direction T of the vehicle.

Furthermore, it is further specified in one embodiment of the present invention that, the grid structure 13 is formed directly by means of a single-layer mesh structure having square light transmissive portions 16. Thereby, the assembly or retrofitting of the display assembly 1 is further simplified.

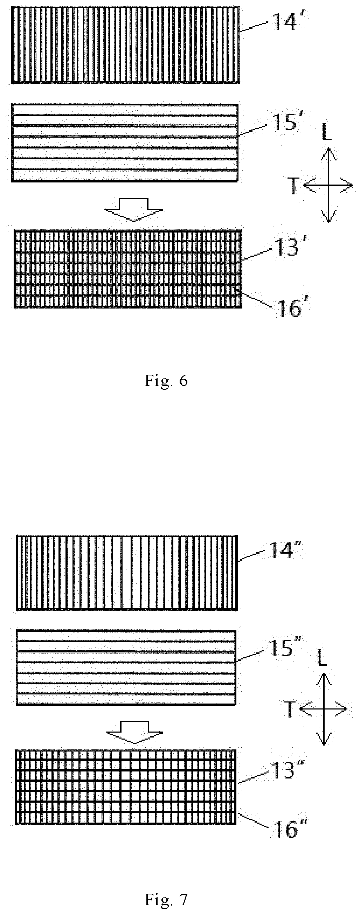

Fig. 5 shows a front view of the vehicle. The driver 8 and the co-driver 9 are situated within the vehicle, and the side-window glazings 17 and 18 are located on both sides of the vehicle. One possible optical path 19 reflected from the position of the display assembly 1 through the side-window glazing to the driver's eyes is schematically shown in a dotted line in Fig. 5. It may be seen from Fig. 5 that, the side-window glazings 17 and 18 of the vehicle are respectively tilted inwards and have a certain curvature. Consequently, it is necessary to more strictly limit the exit angle of the vehicle in the transverse direction T than in the longitudinal direction L, so as to prevent reflection of the light emitted from the display assembly 1 on the side-window glazing 17 or 18. For this reason, the present invention may preferably use the embodiment shown in Fig. 6. A smaller exit angle in the transverse direction T is obtained by more dense louvers in the transverse direction T, so as to avoid reflection on the side-window glazing. Since both ends of the display assembly 1 along the transverse direction are closer to the above-described side-window glazing which is tilted inwards and has a certain curvature, a gradation grid structure as shown in Fig. 7 is also preferable.

Fig. 6 is a schematic view showing another embodiment of a grid structure formed by two layers of louver films in a top view. Similar to Fig. 4, two layers of louver films are also stacked to form a grid structure. However, the two layers of louver films have louver pitches different from each other. As shown in Fig. 6, the louver pitch of the louver film 14' having louvers oriented along the longitudinal direction of the vehicle is smaller than the louver pitch of the louver film 15' having louvers oriented along the transverse direction of the vehicle. Thereby, oblong light transmissive portions 16' are formed in the grid structure 13'. By means of these oblong light transmissive portions 16', different limits of the exit angle in different directions can be formed. Here, the long sides of the respective oblong light transmissive portions 16' are parallel to the longitudinal direction L of the vehicle. With this embodiment, the reflection of the light emitted from the display assembly 1 on the side-window glazings 17 and 18 of the vehicle is more effectively prevented.

However, alternative or additional to the embodiment shown in Fig. 6, according to the present invention, the two layers of louver films may also have louver heights different from each other. Particularly, the louver height of the louver film 14' having the louvers oriented along the longitudinal direction L of the vehicle is greater than the louver height of the louver film 15' having the louvers oriented along the transverse direction T of the vehicle.

Furthermore, it is further specified in one embodiment of the present invention that, the grid structure 13' shown in Fig. 6 is formed directly by means of a single-layer mesh structure having oblong light transmissive portions 16'. Thereby, the assembly or retrofitting of the display assembly 1 is further simplified.

Fig. 7 is a schematic view showing still another embodiment of a grid structure formed by two layers of louver films in a top view. Similar to Figs. 4 and 6, two layers of louver films 14" and 15" are also stacked to form a grid structure. The two layers of louver films have louver pitches different from each other. As shown in Fig. 7, the louver pitch of the louver film 14' having louvers oriented along the longitudinal direction of the vehicle varies in its extension direction. Here, the louver pitch gradually decreases from the center of the light source 12 toward the two transverse edges of the light source 12. Thereby, light transmissive portions 16" having gradation in dimension which are formed in the grid structure 13", are rectangular light transmissive portions which gradually decrease in dimension from the center of the light source 12 toward the two lateral edges. The exit angle gradually decreasing from the center to the both sides can be formed by means of these light transmissive portions 16" having gradation. By means of this embodiment, different requirements for the exit angle at different positions of the display assembly are adapted by varying the mesh dimension. The light efficiency of the display assembly is affected as little as possible while the light exiting from the display assembly 1 is prevented from being reflected on the side-window glazing 17 and 18 of the vehicle.

Furthermore, it is further specified in one embodiment of the present invention that, the grid structure 13' shown in Fig. 7 is formed directly by means of a single-layer mesh structure having light transmissive portions 16" having gradation. Thereby, the assembly or retrofitting of the display assembly 1 is further simplified.

Furthermore, alternatively or additionally, the louver pitch of the louver film 15" oriented along the transverse direction of the vehicle may also vary in its extension direction. Particularly, the louver pitch gradually decreases from the center of the light source 12 toward the two longitudinally edges of the light source 12. More preferably, the grid structures along the transverse direction and the longitudinal direction of the vehicle both gradually decrease from the center toward the both ends in extending direction thereof.

Alternative or additional to the embodiment shown in Fig. 7, it is also possible to allow the louver height of the louver film 14" and/or 15" to vary in an extension direction thereof, and in particular the louver height gradually increases from a center of the light source to edges of the light source.

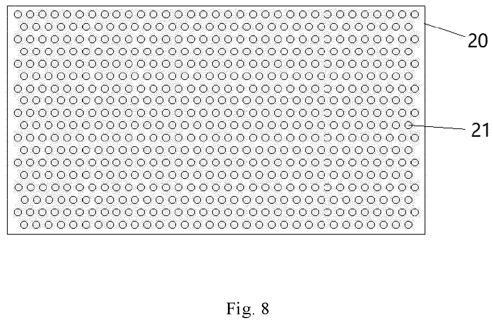

Fig. 8 shows that the microstructure is constructed to be an opaque or light-absorbing pore plate structure 20 in a top view. The pore plate structure 20 forms a plurality of round light transmissive portions 21. With this embodiment, it is first possible to limit the exit angle in all directions, so as to achieve an all-round light limiting effect. Moreover, this embodiment also further simplifies the assembly or retrofitting of the display assembly due to the absence of directional requirements for the film having the pore plate structure when attached.

In addition to the round light transmissive portions 21 as shown in Fig. 8, it is also possible to consider forming a plurality of elliptical light transmissive portions on the pore plate structure, wherein a long axis of the ellipse is oriented along a longitudinal direction of the vehicle. Thereby, a smaller exit angle in the transverse direction T of the vehicle is produced, thereby more effectively avoiding the light emitted from the display assembly 1 from being reflected on the side-window glazings 17 and 18.

Also similar to the above-described embodiments, an aperture of the round light transmissive portions or elliptical light transmissive portions may also vary in an extension direction of the pore plate structure, and in particular the aperture gradually decreases from a center of the light source to edges of the light source and/or a height of the pore plate gradually increases from a center of the light source to edges of the light source. Similarly, different requirements for the exit angle at different positions of the display assembly are adapted by varying the aperture. The light efficiency of the display assembly is affected as little as possible while the light exiting from the display assembly 1 is prevented from being reflected on the side-window glazing 17 and 18 of the vehicle.

In addition to the above-mentioned forms of light transmissive portions, it is also possible to consider polygonal light transmissive portions, such as in a pentagon, a hexagon, an octagon or the like.

The present invention is not limited to the embodiments shown, but includes or encompasses all technical equivalents that fall within the effective scope of the appended claims. The positional descriptions selected in the description, for example, up, down, left, right, and the like, refer to direct descriptions and illustrated drawings and can be transferred to new positions for use according to the meanings when the positions change.

The features disclosed in the present application may be implemented individually and in any combined manner. Further, it should be noted that various accompanying drawings of the present invention are schematic and might not be shown according to a scale. In various embodiments, the amount, construction form, and/or arrangement structure of the light transmissive portions are also not limited to the examples shown. The values listed in the specification are only reference values that may be exceeded or vice versa when the dimension is properly selected.

## Claims

1. A display assembly (1) for a vehicle (2), wherein the display assembly (1) comprises a light source (12) provided in an instrument panel (3) or on an instrument panel (3), for projecting to a windshield of the vehicle (2),
wherein a film (13) having a microstructure is applied onto the light source (12), wherein the microstructure is used for restricting an exit angle of light emitted by the light source (12) in at least two different direction of the vehicle (2);
wherein the microstructure is an opaque or light-absorbing grid structure which forms a plurality of rectangular light transmissive portions (16, 16', 16"), wherein the rectangle has both sides respectively oriented along a longitudinal direction and a transverse direction of the vehicle (2);
**characterized in that**, the grid structure is formed by:
- two layers of louver films (14, 14', 14"), in which louvers are stacked orthogonally to each other, wherein the louver pitch and/or the louver height vary in an extension direction thereof, and in particular the louver pitch gradually decreases from a center of the light source (12) to edges of the light source (12) and/or the louver height gradually increases from a center of the light source (12) to edges of the light source (12); or
- a single layer of meshes, wherein the single layer of meshes define a square or oblong shape, and wherein a mesh dimension of the single layer of meshes varies in an extension direction thereof, in particular the mesh dimension gradually decreases from a center of the light source (12) to edges of the light source (12).

2. The display assembly (1) according to claim 1, **characterized in that**, the two layers of louver films (14, 14', 14") are constructed to be the same; or the two layers of louver films (14, 14', 14") have mutually different louver pitches and/or mutually different louver heights.

3. The display assembly (1) according to claim 2, **characterized in that**, a pitch of the louvers oriented along a longitudinal direction of the vehicle (2) is less than a pitch of the louvers oriented along a transverse direction of the vehicle (2); and/or a height of the louvers oriented along a longitudinal direction of the vehicle (2) is more than a height of the louvers oriented along a transverse direction of the vehicle (2).

4. The display assembly (1) according to claim 1, **characterized in that**, the microstructure is an opaque or light-absorbing pore plate structure which forms a plurality of elliptical light transmissive portions (16, 16', 16"), wherein a long axis of the ellipse is oriented along a longitudinal direction of the vehicle (2).

5. The display assembly (1) according to one of claims 1 to 4, **characterized in that**, the light source (12) includes an LCD display, an LED display, an OLED display, a projection device; and/or the display assembly (1) is a head-up display or an augmented reality display.

6. The display assembly (1) according to one of claims 1 to 5, **characterized in that**, a surface of the light source (12) is constructed to be flat or curved.

7. A vehicle (2), comprising the display assembly (1) according to one of claims 1 to 6, wherein the display assembly (1) is disposed in or on an instrument panel (3) and used for emitting light to a windshield.

## Patentansprüche

1. Anzeigeanordnung (1) für ein Fahrzeug (2), wobei die Anzeigeanordnung (1) eine Lichtquelle (12), die in einem Armaturenbrett (3) oder auf einem Armaturenbrett (3) bereitgestellt wird, zur Projektion auf eine Frontscheibe des Fahrzeugs (2) umfasst,
wobei ein Film (13), der eine Mikrostruktur aufweist, auf die Lichtquelle (12) aufgebracht ist, wobei die Mikrostruktur verwendet wird, um einen Austrittswinkel von Licht, das durch die Lichtquelle (12) emittiert wird, in mindestens zwei unterschiedlichen Richtungen des Fahrzeugs (2) zu begrenzen,
wobei die Mikrostruktur eine opake oder lichtabsorbierende Gitterstruktur ist, die eine Vielzahl rechteckiger lichtdurchlässiger Abschnitte (16, 16', 16") bildet, wobei das Rechteck zwei Seiten aufweist, die entlang einer Längsrichtung beziehungsweise einer Querrichtung des Fahrzeugs (2) orientiert sind;
**dadurch gekennzeichnet, dass** die Gitterstruktur gebildet wird durch:
- zwei Schichten von Lamellenfilmen (14, 14', 14"), worin Lamellen orthogonal zueinander gestapelt sind, wobei die Lamellenteilung und/oder die Lamellenhöhe in einer Ausdehnungsrichtung derselben variieren, und wobei insbesondere die Lamellenteilung allmählich von einem Zentrum der Lichtquelle (12) zu Rändern der Lichtquelle (12) abnimmt und/oder die Lamellenhöhe allmählich von einem Zentrum der Lichtquelle (12) zu Rändern der Lichtquelle (12) zunimmt; oder
- eine Einzelschicht aus Maschen, wobei die Einzelschicht aus Maschen eine quadratische oder längliche Form definiert, und wobei eine Maschenabmessung der Einzelschicht von Maschen in einer Ausdehnungsrichtung derselben variiert, wobei insbesondere die Maschenabmessung allmählich von einem Zentrum der Lichtquelle (12) zu Rändern der Lichtquelle (12) abnimmt.

2. Anzeigeanordnung (1) nach Anspruch 1, **dadurch gekennzeichnet, dass** die zwei Schichten von Lamellenfilmen (14, 14', 14") so konstruiert sind, dass sie gleich sind; oder die zwei Schichten von Lamellenfilmen (14, 14', 14") voneinander verschiedene Lamellenteilungen und/oder voneinander verschiedene Lamellenhöhen haben.

3. Anzeigeanordnung (1) nach Anspruch 2, **dadurch gekennzeichnet, dass** eine Teilung der Lamellen, die entlang einer Längsrichtung des Fahrzeugs (2) orientiert sind, kleiner als eine Teilung der Lamellen ist, die entlang einer Querrichtung des Fahrzeugs (2) orientiert sind; und/oder eine Höhe der Lamellen, die entlang einer Längsrichtung des Fahrzeugs (2) orientiert sind, größer als eine Höhe der Lamellen ist, die entlang einer Querrichtung des Fahrzeugs (2) orientiert sind.

4. Anzeigeanordnung (1) nach Anspruch 1, **dadurch gekennzeichnet, dass** die Mikrostruktur eine opake oder lichtabsorbierende Porenplattenstruktur ist, die eine Vielzahl von elliptischen lichtdurchlässigen Abschnitten (16, 16', 16") bildet, wobei eine Längsachse der Ellipse entlang einer Längsrichtung des Fahrzeugs (2) orientiert ist.

5. Anzeigeanordnung (1) nach einem der Ansprüche 1 bis 4, **dadurch gekennzeichnet, dass** die Lichtquelle (12) eine LCD-Anzeige, eine LED-Anzeige, eine OLED-Anzeige, eine Projektionsvorrichtung einschließt; und/oder die Anzeigeanordnung (1) eine Head-Up-Anzeige oder eine Augmented-Reality-Anzeige ist.

6. Anzeigeanordnung (1) nach einem der Ansprüche 1 bis 5, **dadurch gekennzeichnet, dass** eine Oberfläche der Lichtquelle (12) so konstruiert ist, dass sie flach oder gekrümmt ist.

7. Fahrzeug (2), umfassend die Anzeigeanordnung (1) nach einem der Ansprüche 1 bis 6, wobei die Anzeigeanordnung (1) in oder auf einem Armaturenbrett (3) angeordnet und zum Emittieren von Licht auf eine Frontscheibe verwendet wird.

## Revendications

1. Ensemble d'affichage (1) pour un véhicule (2), l'ensemble d'affichage (1) comprenant une source de lumière (12) disposée dans un tableau de bord (3) ou sur un tableau de bord (3), pour une projection vers un pare-brise du véhicule (2),
dans lequel un film (13) ayant une microstructure est appliqué sur la source de lumière (12), dans lequel la microstructure est utilisée pour limiter un angle de sortie de la lumière émise par la source de lumière (12) dans au moins deux directions différentes du véhicule (2) ;
dans lequel la microstructure est une structure de grille opaque ou absorbant la lumière qui forme une pluralité de parties transmettant la lumière rectangulaires (16, 16', 16"), dans lequel le rectangle a les deux côtés respectivement orientés le long d'une direction longitudinale et d'une direction transversale du véhicule (2) ;
**caractérisé en ce que** la structure de grille est formée par :
- deux couches de films à persiennes (14, 14', 14"), dans lesquelles des persiennes sont empilées orthogonalement les unes aux autres, dans lesquelles le pas de persienne et/ou la hauteur de persienne varient dans une direction d'extension de celles-ci, et en particulier le pas de persienne diminue progressivement depuis un centre de la source de lumière (12) vers des bords de la source de lumière (12) et/ou la hauteur de persienne augmente progressivement depuis un centre de la source de lumière (12) vers des bords de la source de lumière (12) ; ou
- une unique couche de mailles, l'unique couche de mailles définissant une forme carrée ou oblongue, et une dimension de maille de l'unique couche de mailles variant dans une direction d'extension de celle-ci, en particulier la dimension de maille diminuant progressivement depuis un centre de la source de lumière (12) vers des bords de la source de lumière (12).

2. Ensemble d'affichage (1) selon la revendication 1, **caractérisé en ce que** les deux couches de films à persiennes (14, 14', 14") sont construites pour être identiques ; ou les deux couches de films à persiennes (14, 14', 14") ont des pas de persienne mutuellement différents et/ou des hauteurs de persienne mutuellement différentes.

3. Ensemble d'affichage (1) selon la revendication 2, **caractérisé en ce qu'**un pas des persiennes orientées le long d'une direction longitudinale du véhicule (2) est inférieur à un pas des persiennes orientées le long d'une direction transversale du véhicule (2) ; et/ou une hauteur des persiennes orientées le long d'une direction longitudinale du véhicule (2) est supérieure à une hauteur des persiennes orientées le long d'une direction transversale du véhicule (2).

4. Ensemble d'affichage (1) selon la revendication 1, **caractérisé en ce que** la microstructure est une structure de plaque poreuse opaque ou absorbant la lumière qui forme une pluralité de parties transmettant la lumière elliptiques (16, 16', 16"), dans lequel un grand axe de l'ellipse est orienté le long d'une direction longitudinale du véhicule (2).

5. Ensemble d'affichage (1) selon une des revendications 1 à 4, **caractérisé en ce que** la source de lumière (12) comporte un écran LCD, un écran LED, un écran OLED, un dispositif de projection ; et/ou l'ensemble d'affichage (1) est un dispositif d'affichage tête haute ou un dispositif d'affichage à réalité augmentée.

6. Ensemble d'affichage (1) selon une des revendications 1 à 5, **caractérisé en ce qu'**une surface de la source de lumière (12) est construite pour être plate ou incurvée.

7. Véhicule (2), comprenant l'ensemble d'affichage (1) selon une des revendications 1 à 6, dans lequel l'ensemble d'affichage (1) est disposé dans ou sur un tableau de bord (3) et utilisé pour émettre de la lumière vers un pare-brise.
